# EUROPEAN PATENT SPECIFICATION

(11) **EP 4 213 127 B1**
(45) Date of publication and mention of the grant of the patent: **24.09.2025**
(21) Application number: 21863901.1
(22) Date of filing: 26.05.2021
(51) Int. Cl.: G08G 1/16, B60W 40/02, G01S 7/48, G01S 17/87, G01S 17/89, G01S 17/931

(54) **INFORMATION PROCESSING METHOD AND INFORMATION PROCESSING DEVICE**
INFORMATIONSVERARBEITUNGSVERFAHREN UND INFORMATIONSVERARBEITUNGSVORRICHTUNG
PROCÉDÉ DE TRAITEMENT D'INFORMATIONS ET DISPOSITIF DE TRAITEMENT D'INFORMATIONS

(30) Priority: 07.09.2020 JP 2020149943
(43) Date of publication of application: 19.07.2023
(73) Proprietor: Panasonic Intellectual Property Management Co., Ltd., Osaka-shi, Osaka 540-6207 (JP)
(72) Inventor: ANABUKI, Motoshi, Osaka-shi, Osaka 540-6207 (JP)
(74) Representative: Novagraaf International SA
(86) International application number: PCT/JP2021/020093
(87) International publication number: WO 2022/049842

(56) References cited:
- CN-A- 110 687 549
- JP-A- 2019 535 014
- US-A1- 2019 180 467
- US-A1- 2021 124 054

## Description

### [Technical Field]

The present invention relates to an information processing method and an information processing device.

### [Background Art]

Autonomous vehicles are expected to be widely used, and point group detection sensors such as LiDAR (Light Detection And Ranging) sensors are used as possible external environment recognition sensors that are incorporated in autonomous vehicles. For object detection that uses such point group detection sensors, a technique that uses gradients or normal vectors of gradients relative to the horizontal direction that are obtained from a plurality of points sensed by the point group detection sensors is commonly used. For example, Patent Literature (PTL) 1 discloses an object detection method that uses this technique.

However, a positional or angular displacement of a point group detection sensor (hereinafter also referred to simply as "point group detection sensor displacement") may occur due to vibration, deformation of the vehicle, or the like while the vehicle is running, which may cause a malfunction in the subsequent processing. For example, Patent Literature (PTL) 2 discloses a technique in which the amount of displacement of a point group detection sensor is measured, and the point group detection sensor is corrected based on the amount of displacement obtained as a result of the

CN 110 687 549 discloses obstacle detection based on a point cloud of data. First and second point cloud data are collected by a first and second laser radar, respectively, mounted at different heights. Ground estimation is performed based on the first point cloud data. A ground point in the second point cloud data is filtered out according to the ground estimation result of the first point cloud data, and the the first and second point cloud data are fused, to perform obstacle detection. US 2019/180467 discloses a method for positioning objects around a vehicle. This document discloses classifying the points in a point cloud in points that are too low (ground), or too high (e.g., at a height that is unlikely to be an object to avoid or to consider during driving), which may be removed by the control unit before identifying the one or more objects. The remaining points are clustered into a plurality of clusters in a 3D point cloud image (e.g. distance between points that are less than a threshold is clustered into a same cluster).

### [Citation List]

### [Patent Literatures]

[PTL 1] Japanese Unexamined Patent Application Publication No. 2019-50035
[PTL 2] Japanese Unexamined Patent Application Publication No. 2020-46411

### [Summary of Invention]

### [Technical Problem]

However, with the method disclosed in PTL 2, it is difficult to accurately measure a displacement of a point group detection sensor. For this reason, due to the displacement of the point group detection sensor, a malfunction may occur in the subsequent processing that uses point group information.

Accordingly, the present disclosure provides an information processing method and the like that can suppress the occurrence of a malfunction in the subsequent processing caused by a displacement of a point group detection sensor without measuring the displacement of the point group detection sensor.

### [Solution to Problem]

The invention is defined by the independent claims. Preferred embodiments are listed in the dependent claims.

### [Advantageous Effects of Invention]

With the information processing method according to an aspect of the present disclosure, and the like, it is possible to suppress the occurrence of a malfunction in the subsequent processing caused by a displacement of a point group detection sensor without measuring the displacement of the point group detection sensor.

### [Brief Description of Drawings]

[FIG. 1]

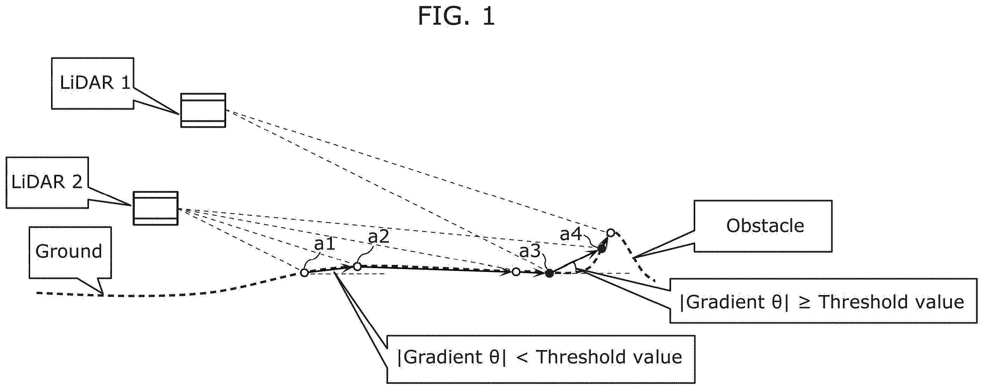

   FIG. 1 is a diagram illustrating the principle of an obstacle detection that uses point group detection sensors.
[FIG. 2]

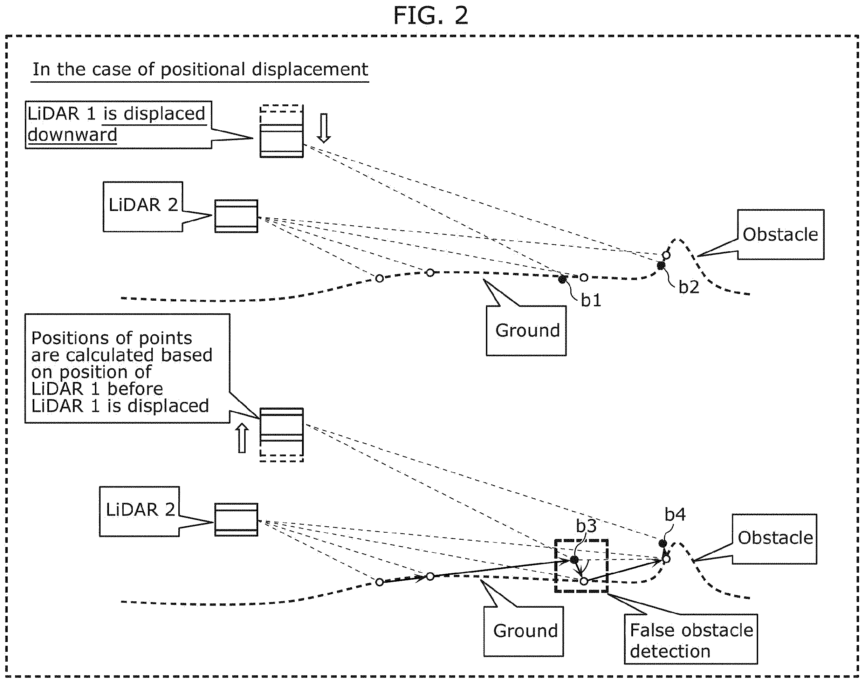

   FIG. 2 is a diagram illustrating a false obstacle detection caused by a positional displacement of a point group detection sensor.
[FIG. 3]

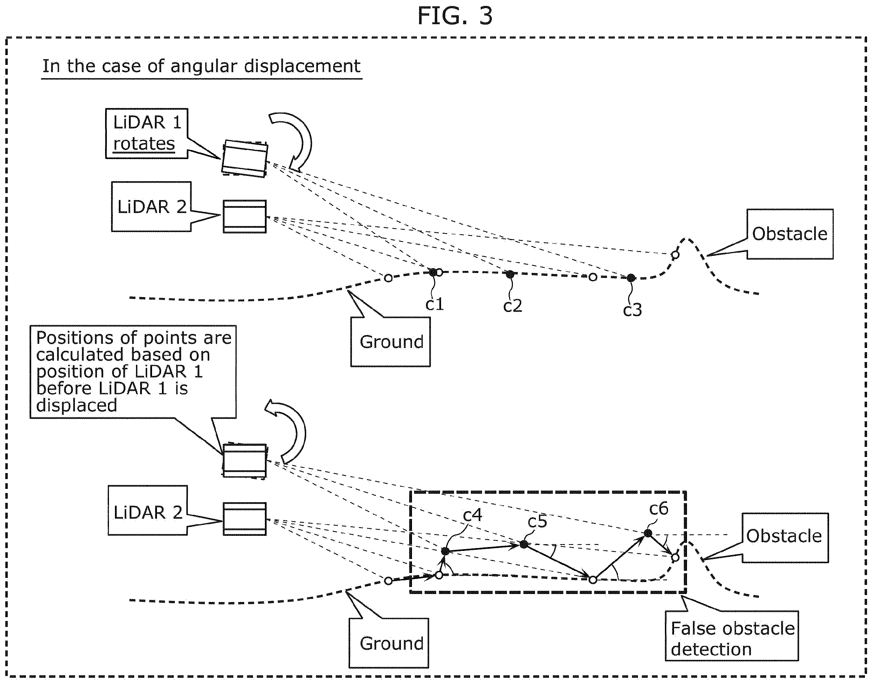

   FIG. 3 is a diagram illustrating a false obstacle detection caused by an angular displacement of a point group detection sensor.
[FIG. 4]

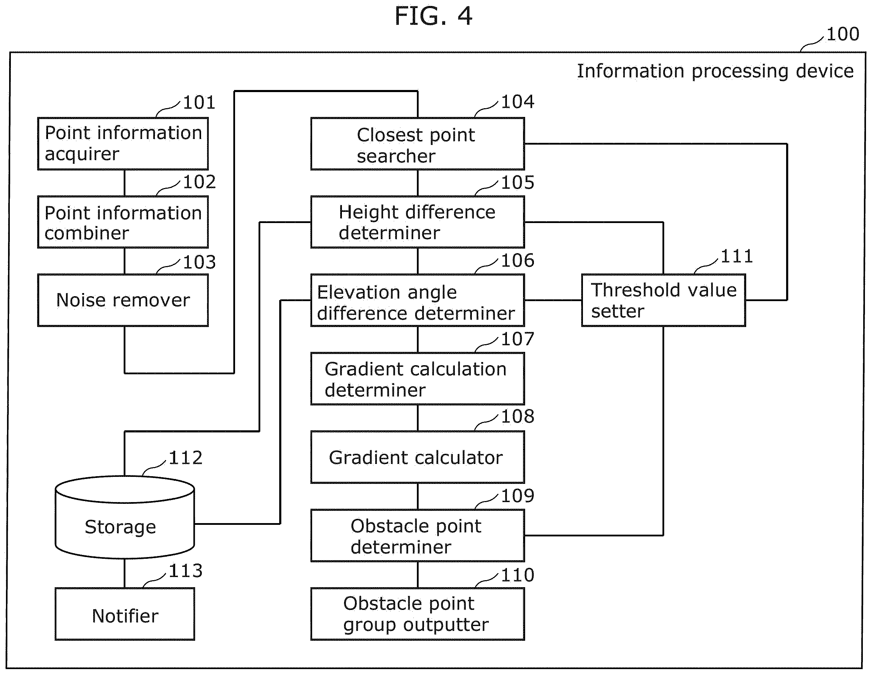

   FIG. 4 is a block diagram showing an example of an information processing device according to an embodiment.
[FIG. 5]

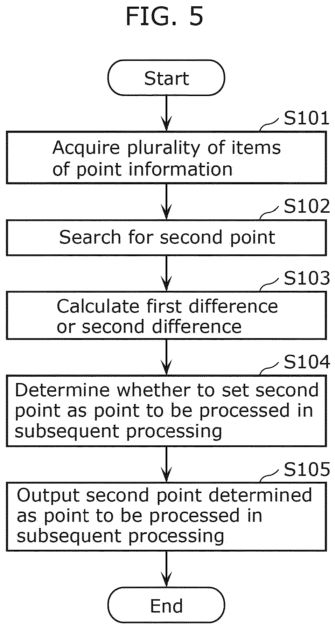

   FIG. 5 is a flowchart illustrating an example of an information processing method.
[FIG. 6]

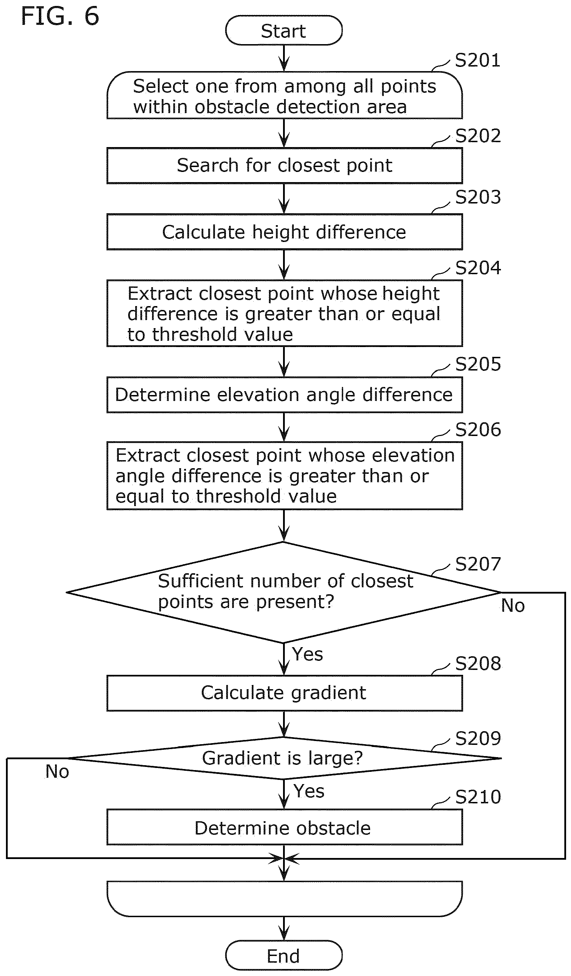

   FIG. 6 is a flowchart illustrating an example of an obstacle detection operation performed by the information processing device.
[FIG. 7]

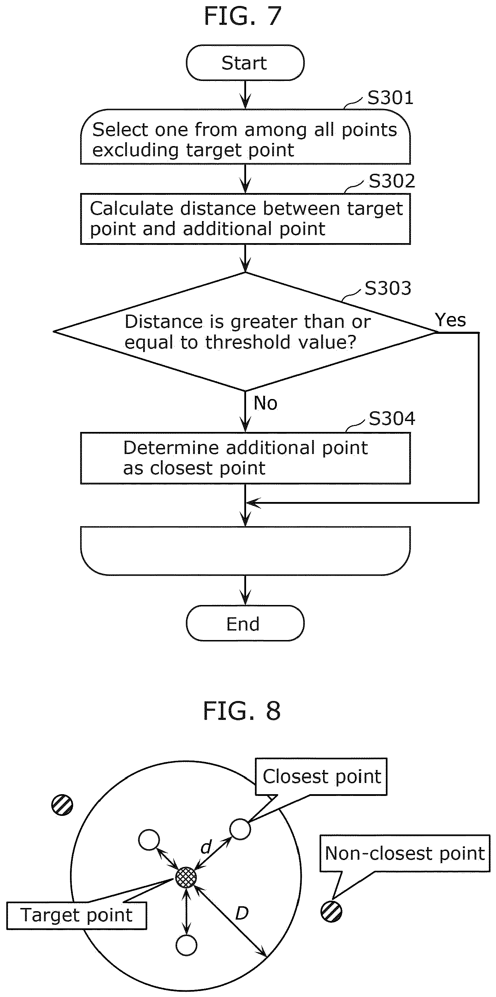

   FIG. 7 is a flowchart illustrating a specific example of an operation performed by a closest point searcher.
[FIG. 8]
   FIG. 8 is a diagram showing an example of a closest point and a non-closest point.
[FIG. 9]

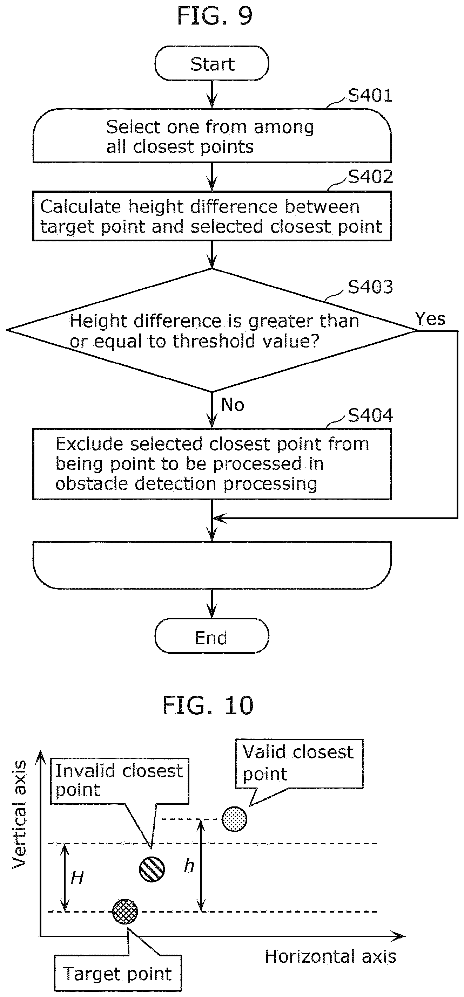

   FIG. 9 is a flowchart illustrating a specific example of an operation performed by a height difference determiner.
[FIG. 10]
   FIG. 10 is a diagram showing an example of a valid closest point and an invalid closest point determined based on a height difference.
[FIG. 11]

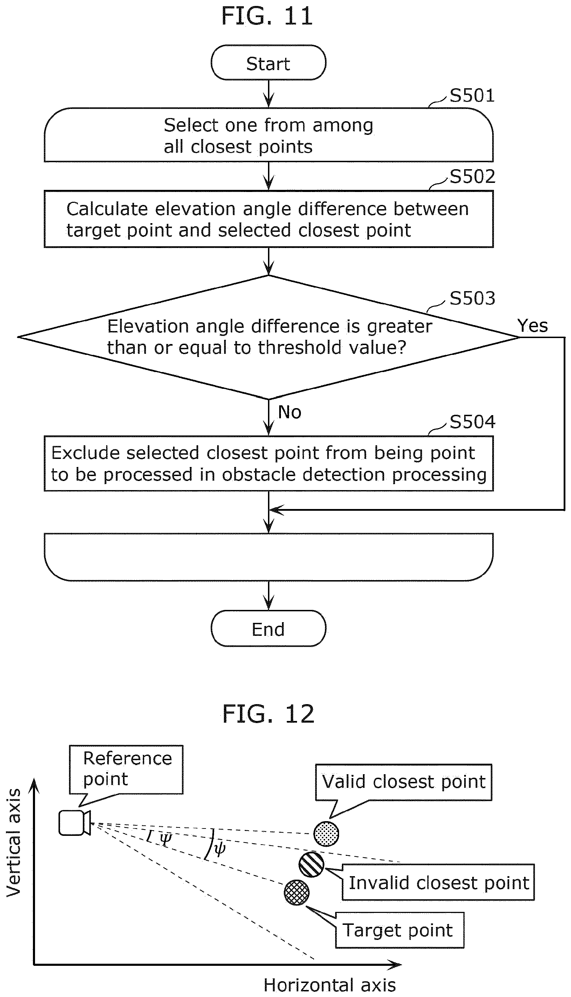

   FIG. 11 is a flowchart illustrating a specific example of an operation performed by an elevation angle difference determiner.
[FIG. 12]
   FIG. 12 is a diagram showing an example of a valid closest point and an invalid closest point determined based on an elevation angle difference.
[FIG. 13]

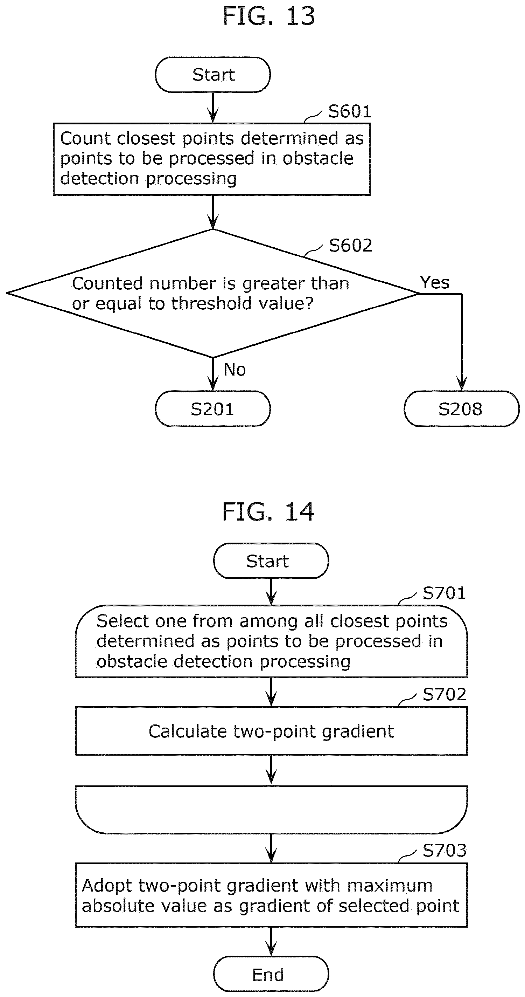

   FIG. 13 is a flowchart illustrating a specific example of an operation performed by a gradient calculation determiner.
[FIG. 14]
   FIG. 14 is a flowchart illustrating a specific example of an operation performed by a gradient calculator.
[FIG. 15]

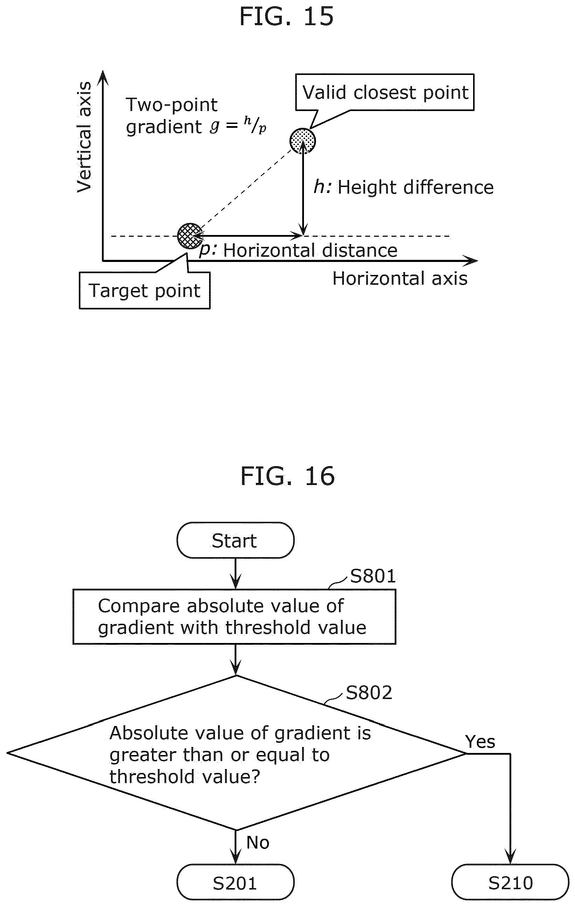

   FIG. 15 is a diagram illustrating a method for calculating a two-point gradient.
[FIG. 16]
   FIG. 16 is a flowchart illustrating a specific example of an operation performed by an obstacle point determiner.
[FIG. 17]

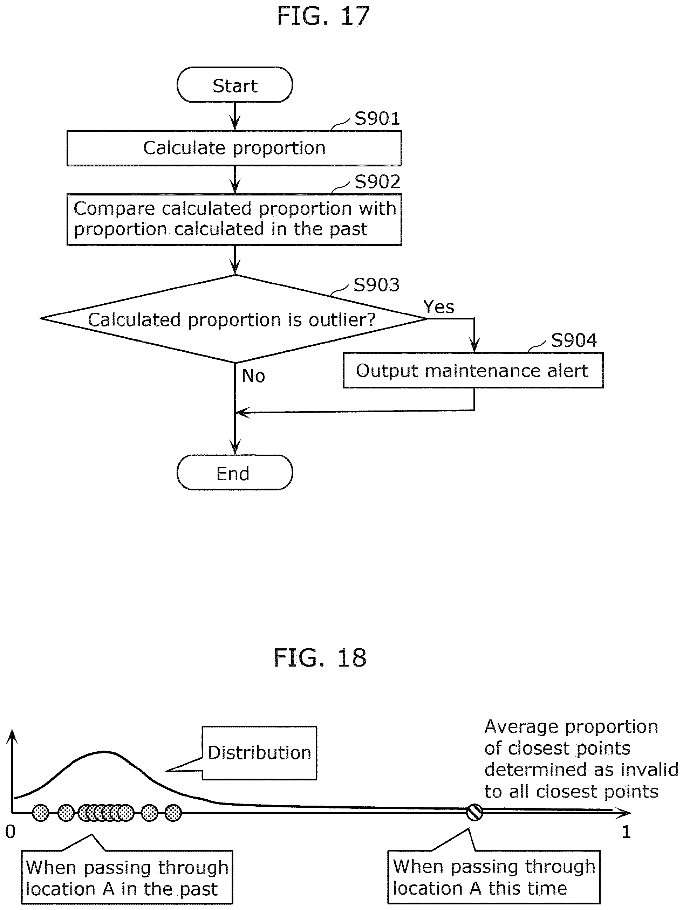

   FIG. 17 is a flowchart illustrating a specific example of an operation performed by a notifier.
[FIG. 18]
   FIG. 18 is a diagram showing an example in which the currently calculated proportion is an outlier as compared with the proportion calculated in the past.
[FIG. 19]

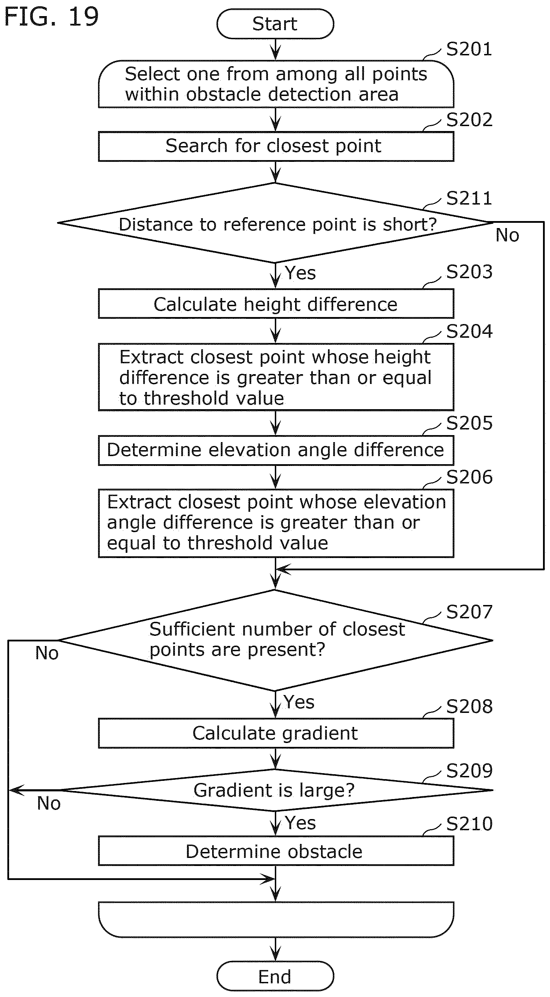

   FIG. 19 is a flowchart illustrating an example of an obstacle detection operation performed by an information processing device according to the invention.
[FIG. 20]

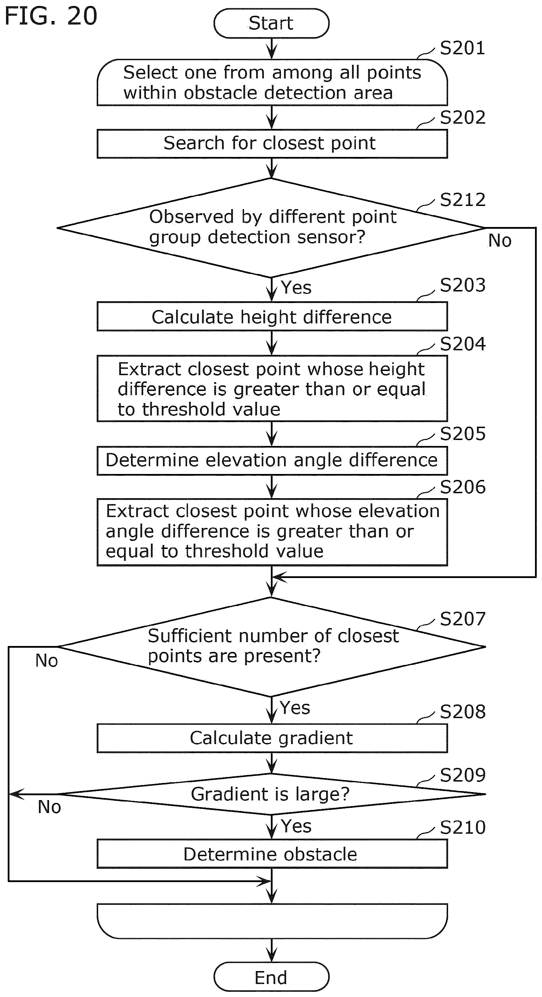

   FIG. 20 is a flowchart illustrating an example of an obstacle detection operation performed by an information processing device according to the invention.

### [Description of Embodiments]

As described above, it is difficult to accurately measure a displacement of a point group detection sensor as disclosed in PTL 2. For this reason, due to the displacement of the point group detection sensor, malfunctions may occur in the subsequent processing that uses point group information.

If it is assumed that measurement for a displacement of a point group detection sensor is performed, a device such as a vibration detector is required, and the calculation load also increases. That is, with the conventional technology, there is a problem with suppressing malfunctions in the subsequent processing caused by a displacement of a point group detection sensor in terms of cost and the amount of calculation.

In view of the above, an information processing method is an information processing method executed by a computer, the information processing method including: acquiring a plurality of items of point information including position information indicating positions of points sensed by at least one point group detection sensor provided in a mobile body; searching for a second point that is present within a predetermined area from a first point that is present within a point group indicated by the plurality of items of point information; calculating at least one of a first difference or a second difference, the first difference being a height difference between the first point and the second point, and the second difference being an angle formed by a straight line that connects a reference point and the first point and a straight line that connects the reference point and the second point; determining, based on at least one of the first difference or the second difference, whether to set the second point as a point to be processed in subsequent processing; and outputting point information of the second point when the second point is determined to be set as the point to be processed in the subsequent processing.

For example, when one of the point group detection sensors is positionally or angularly displaced due to vibration, the position information indicating the positions of points that were sensed by the point group detection sensor may be different from the actual positions of the points. In this case, in the subsequent processing that includes, for example, processing that uses gradients, a malfunction such as a false obstacle detection in which a steep gradient is detected despite the fact that there is actually no steep gradient may occur. However, it is often the case that the positional or angular displacement of the point group detection sensor caused due to vibration associated with the movement of the mobile body is very small. For this reason, it is often the case that a height difference between two points that may be detected as forming a steep gradient or an angle formed by a straight line that connects the reference point and one of two points and a straight line that connects the reference point and the other one of the two points caused by the positional or angular displacement of the point group detection sensor is also very small. Accordingly, a determination as to whether to set the second point as a point to be processed in the subsequent processing is made based on at least one of a first difference or a second difference, the first difference being a height difference between a first point and a second point within a predetermined area sensed by the point group detection sensor, and the second difference being an angle (also referred to as "elevation angle difference") formed by a straight line that connects the reference point and the first point and a straight line that connects the reference point and the second point. With this configuration, it is possible to prevent a situation in which a second point that is falsely determined as forming a steep gradient due to the positional or angular displacement of the point group detection sensor is determined as a point to be processed in the subsequent processing, despite the fact that the first difference or the second difference is very small. Accordingly, it is possible to suppress the occurrence of a malfunction in the subsequent processing caused by the displacement of the point group detection sensor without measuring the displacement of the point group detection sensor.

Also, furthermore, the information processing method may further include: calculating a distance between the reference point and the first point or a distance between the reference point and the second point; and determining whether to calculate at least one of the first difference or the second difference based on the distance between the reference point and the first point or the distance between the reference point and the second point.

The spacing between points in a point group to be sensed increases as the distance from the reference point increases. In the case where second points in the point group are determined to be not set as points to be processed in the subsequent processing, the number of points that can be used in the subsequent processing decreases as the distance from the reference point increases, which makes it difficult to perform the subsequent processing. Accordingly, in the case where the distance between the reference point and the first point or the distance between the reference point and the second point is long, at least one of the first difference or the second difference is not calculated. Specifically, the processing of determining whether to set the second point as a point to be processed in the subsequent processing is skipped, and the subsequent processing is performed without fail. With this configuration, second points that are spaced apart from the reference point can be determined as points to be processed in the subsequent processing, and it is therefore possible to suppress a situation in which points that are spaced apart from the reference point are not used in the subsequent processing.

Also, the at least one point group detection sensor may include a plurality of point group detection sensors. The information processing method may further include: determining whether a point group detection sensor that sensed the first point matches a point group detection sensor that sensed the second point; and when it is determined that the point group detection sensor that sensed the first point does not match the point group detection sensor that sensed the second point, calculating at least one of the first difference or the second difference.

In the case where sensing is performed by using a plurality of point group detection sensors, a first point and a second point sensed by different point group detection sensors are more susceptible to the displacement of the point group detection sensor as compared with a first point and a second point sensed by the same point group detection sensor, and thus a malfunction is more likely to occur in the subsequent processing. For this reason, in the case where the point group detection sensor that sensed the first point does not match the point group detection sensor that sensed the second point, at least one of the first difference or the second difference is calculated. In other words, in the case where the point group detection sensor that sensed the first point matches the point group detection sensor that sensed the second point, at least one of the first difference or the second difference is not calculated. Specifically, the processing of determining whether to set the second point as a point to be processed in the subsequent processing is skipped, and the subsequent processing is performed without fail. With this configuration, as many second points that are unlikely to cause a malfunction in the subsequent processing as possible can be determined as points to be processed in the subsequent processing.

Also, furthermore, the information processing method may further include: calculating a proportion of second points determined to be not set as the point to be processed in the subsequent processing, the second points each being the second point; storing the proportion calculated, for each scene as a history; determining whether different proportions are stored for a same scene as the history, each of the proportions being the proportion of second points determined to be not set as the point to be processed in the subsequent processing; and when it is determined that different proportions are stored as the history, outputting a notification. For example, the scene may include a position. The history may be stored for each position or position attribute sensed by the at least one point group detection sensor. Whether different proportions are stored as the history may be determined for scenes whose positions or position attributes match each other.

In the case where the proportion of second points determined to be not set as points to be processed in the subsequent processing is different from the proportion in the history despite the fact that the scene is the same (for example, for a scene in which the position or the position attribute matches), the point group detection sensor and the like may have a problem. Accordingly, in this case, by outputting a notification, it is possible to cause the passengers, the manager, and the like of the mobile body to recognize, for example, the problem in the point group detection sensor or the like.

Also, furthermore, the information processing method may further include: acquiring mobile body information that indicates characteristics of the mobile body; and determining the predetermined area based on the mobile body information.

As a result of the predetermined area being determined based on the characteristics of the mobile body as described above, it is possible to determine a predetermined area suitable for the mobile body. In other words, it is possible to search for a second point that is very likely to affect the movement of the mobile body. Accordingly, it is possible to suppress the occurrence of a malfunction in the subsequent processing while optimizing the amount of calculation.

Also, the mobile body information may include at least one of a height or a width of the mobile body, and the predetermined area may be determined based on at least one of the height or the width of the mobile body.

Point information regarding points that are located in an area outside the height or the width of the mobile body may not be valid information in the subsequent processing. Accordingly, by determining the predetermined area as a search area for second points based on the height or the width of the mobile body, it is possible to effectively use point information regarding second points determined as point to be processed in the subsequent processing.

Also, whether to set the second point as the point to be processed in the subsequent processing may be determined by determining whether the first difference is greater than or equal to a threshold value. The mobile body information may include vibration characteristics of the mobile body or an ability of the mobile body to pass over bumps. The threshold value for the first difference may be determined based on the vibration characteristics of the mobile body or the ability of the mobile body to pass over bumps.

By using a maximum positional displacement of the point group detection sensor that may be caused due to vibration of the mobile body as the threshold value, it is possible to prevent a second point that may form a height difference with the first point caused by the vibration of the mobile body and cause a malfunction from being set as a point to be processed in the subsequent processing. Alternatively, a maximum height difference over which the mobile body cannot pass may be set as the threshold value. By doing so, it is possible to prevent a second point that may form a height difference with the first point over which the mobile body can pass and may not cause a problem even when the second point is not set as a point to be processed in the subsequent processing from being set as a point to be processed in the subsequent processing. Also, a noise removal filter that utilizes moving average or the like may be used to prevent a second point as described above from being set as a point to be processed in the subsequent processing, but it is difficult to adjust a moving average parameter because it is a time-window width. On the other hand, in this aspect, an intuitive parameter such as the ability of the mobile body to pass over bumps can be used, and the threshold value can be easily adjusted. Also, By setting a maximum positional displacement of the point group detection sensor that may be caused by the vibration of the mobile body as the threshold value, it is possible to prevent a second point that may form a height difference with the first point caused by the vibration of the mobile body and cause a false detection from being set as a point to be processed in the subsequent processing. Alternatively, a maximum height difference over which the mobile body cannot pass may be set as the threshold value. By doing so, it is possible to prevent a second point that may form a height difference with the first point over which the mobile body can pass and may not cause a problem even when the second point is not set as a point to be processed in the subsequent processing from being set as a point to be processed in the subsequent processing. Also, a noise removal filter that utilizes moving average or the like may be used to prevent a second point as described above from being set as a point to be processed in the subsequent processing, but it is difficult to adjust a moving average parameter because it is a time-window width. On the other hand, in this aspect, an intuitive parameter such as the ability of the mobile body to pass over bumps can be used, and the threshold value can be easily adjusted. Also, as the threshold value for the first difference takes a greater value, the false detection rate decreases, and the undetection rate increases (or in other words, as the threshold value for the first difference takes a smaller value, the false detection rate increases, and the undetection rate decreases). Accordingly, by adjusting the threshold value for the first difference, it is possible to control the false detection rate and the undetection rate according to the ability of the mobile body, usage environment, or the like.

Also, whether to set the second point as the point to be processed in the subsequent processing may be determined by determining whether the second difference is greater than or equal to a threshold value. The mobile body information may include vibration characteristics of the mobile body. The threshold value for the second difference may be determined based on the vibration characteristics of the mobile body.

By using a maximum angular displacement of the point group detection sensor that may be caused due to vibration of the mobile body as the threshold value, it is possible to prevent a second point whose elevation angle difference corresponds to an elevation angle difference caused due to vibration of the mobile body and that may cause a malfunction from being determined as a point to be processed in the subsequent processing. Also, as the threshold value for the second difference takes a greater value, the false detection rate decreases, and the undetection rate increases (or in other words, as the threshold value for the second difference takes a smaller value, the false detection rate increases, and the undetection rate decreases). Accordingly, by adjusting the threshold value for the second difference, it is possible to control the false detection rate and the undetection rate according to the ability of the mobile body, usage environment, or the like.

Also, the subsequent processing may include object detection processing.

With this configuration, it is possible to suppress the occurrence of a false object detection caused by a displacement of a point group detection sensor without measuring the displacement of the point group detection sensor.

An information processing device includes: an acquirer that acquires a plurality of items of point information including position information indicating positions of points sensed by at least one point group detection sensor provided in a mobile body; a searcher that searches for a second point that is present within a predetermined area from a first point that is present within a point group indicated by the plurality of items of point information; a calculator that calculates at least one of a first difference or a second difference, the first difference being a height difference between the first point and the second point, and the second difference being an angle formed by a straight line that connects a reference point and the first point and a straight line that connects the reference point and the second point; a determiner that determines, based on at least one of the first difference or the second difference, whether to set the second point as a point to be processed in the subsequent processing; and an outputter that outputs point information of the second point when the second point is determined to be set as the point to be processed in the subsequent processing.

With this configuration, it is possible to provide an information processing device that can suppress the occurrence of a malfunction in the subsequent processing caused by a displacement of a point group detection sensor without measuring the displacement of the point group detection sensor.

Prior to describing an embodiment, an obstacle detection performed by a point group detection sensor and a false obstacle detection that occurs when a point group detection sensor is displaced will be described below.

FIG. 1 is a diagram illustrating the principle of obstacle detection that uses point group detection sensors. FIG. 1 shows two point group detection sensors, namely, LiDAR 1 and LiDAR 2.

LiDAR is a sensor that emits laser light to an observation area, and calculates the positions of detection points based on the optical path length of the scattered light and the angle at which the laser light was emitted. For example, a plurality of items of point information including position information regarding the points sensed by the LiDAR can be used to detect an object such as an obstacle.

As shown in FIG. 1, the absolute value of gradient θ of a straight line that connects point a1 and point a2 that were sensed by LiDAR 2 relative to the horizontal direction is smaller than a threshold value. The threshold value is an angle used to determine whether the object that is forming gradient θ is an obstacle. From point a1 and point a2 obtained by LiDAR 2, it can be detected that there is no obstacle in this area. On the other hand, the absolute value of gradient θ of a straight line that connects point a3 and point a4 that were sensed by LiDAR 1 and LiDAR 2 relative to the horizontal direction is greater than or equal to the threshold value. From point a3 and point a4 obtained by LiDAR 1 and LiDAR 2, it can be detected that there is an obstacle in this area.

For example, a point group detection sensor such as a LiDAR sensor is incorporated in a mobile body such as an vehicle, and is used to detect an obstacle in the surroundings of the vehicle. The vehicle vibrates while it is running, which causes the point group detection sensor incorporated in the vehicle to vibrate, and causes a positional or angular displacement of the point group detection sensor. The influence caused by a positional displacement of a point group detection sensor will be described with reference to FIG. 2, and the influence caused by an angular displacement of a point group detection sensor will be described with reference to FIG. 3.

FIG. 2 is a diagram illustrating a false obstacle detection caused by a positional displacement of one of the point group detection sensors.

It is assumed here that point group detection sensor LiDAR 1 vibrates in the up-down direction (for example, in the vertical direction), and as shown on the upper side of FIG. 2, point b1 and point b2 are sensed by LiDAR 1 immediately after LiDAR 1 is displaced. Position information regarding the points sensed by LiDAR 1 and LiDAR 2 is calculated based on the relative positional relationship between LiDAR 1 and LiDAR 2 before LiDAR 1 is displaced downward as shown on the lower side of FIG. 2, LiDAR 1. Accordingly, as a result of the calculation, it is determined that point b1 and point b2 are located at the positions of point b3 and point b4 that are higher than the actual positions of point b1 and point b2. For this reason, in an area surrounded by a dotted frame on the lower side of FIG. 2, it is determined that the absolute value of gradient θ is greater than or equal to the threshold value, resulting in a false obstacle detection.

FIG. 3 is a diagram illustrating a false obstacle detection caused by an angular displacement of one of the point group detection sensors.

It is assumed here that point group detection sensor LiDAR 1 vibrates, and as shown on the upper side of FIG. 3, point c1, point c2, and point c3 are sensed by LiDAR 1 immediately after LiDAR 1 rotates (rotates on its own axis). Position information regarding the points sensed by LiDAR 1 and LiDAR 2 is calculated based on the relative positional relationship between LiDAR 1 and LiDAR 2 before LiDAR 1 rotates as shown on the lower side of FIG. 3. Accordingly, as a result the calculation, it is determined that point c1, point c2, and point c3 are located at the positions of point c4, point c5, and point c6 that are obliquely upward with respect to the actual positions of point c1, point c2, and point c3. For this reason, in an area surrounded by a dotted frame on the lower side of FIG. 3, it is determined that the absolute value of gradient θ is greater than or equal to the threshold value, resulting in a false obstacle detection.

To address this, an information processing method and an information processing device that can suppress malfunctions (hereinafter also referred to as, for example, "false detections") in subsequent processing, such as object detection processing, performed after a point group is sensed by the point group detection sensors will be described specifically with reference to the drawings.

The examples described below shows a generic or specific example of the present disclosure. The numerical values, shapes, materials, structural elements, the arrangement and connection of the structural elements, steps, the order of the steps, and the like shown in the following embodiment are merely examples.

### Embodiment

FIG. 4 is a block diagram showing an example of information processing device 100 according to an embodiment.

Information processing device 100 is a device for performing subsequent processing by using a plurality of items of point information including position information regarding points sensed by the point group detection sensors. The subsequent processing includes, for example, object detection processing (also referred to as "obstacle detection processing"). The subsequent processing may also include, instead of or together with object detection processing, distance detection processing, shape detection processing, and the like. Also, as the subsequent processing, a plurality of processing operations may be performed. Information processing device 100 includes point information acquirer 101, point information combiner 102, noise remover 103, closest point searcher 104, height difference determiner 105, elevation angle difference determiner 106, gradient calculation determiner 107, gradient calculator 108, obstacle point determiner 109, obstacle point group outputter 110, threshold value setter 111, storage 112, and notifier 113.

Information processing device 100 is a computer that includes a processor, a memory, and the like. The memory includes a ROM (Read Only Memory), a RAM (Random Access Memory), and the like, and is capable of storing programs that are executed by the processor. Point information acquirer 101, point information combiner 102, noise remover 103, closest point searcher 104, height difference determiner 105, elevation angle difference determiner 106, gradient calculation determiner 107, gradient calculator 108, obstacle point determiner 109, obstacle point group outputter 110, threshold value setter 111, and notifier 113 are implemented by the processor that executes the programs stored in the memory. Storage 112 may be implemented by using the same memory as that in which the programs are stored, or a different memory.

Information processing device 100 is a device incorporated in, for example, a mobile body. The mobile body is, for example, an vehicle, but may be an unmanned aerial mobile body, a robot, a vessel, or the like. Information processing device 100 does not necessarily need to be incorporated in a mobile body, and may be a server. Also, the structural elements that constitute information processing device 100 may be provided dispersedly in a plurality of servers.

Point information acquirer 101 is an example of an acquirer that acquires a plurality of items of point information including position information regarding points sensed by at least one point group detection sensor from the at least one point group detection sensor. Point information acquirer 101 may acquire the plurality of items of point information directly from the at least one point group detection sensor, or may acquire the plurality of items of point information from the at least one point group detection sensor via another device. Also, point information acquirer 101 may acquire position information of the at least one point group detection sensor. The position information of the at least one point group detection sensor may be stored in information processing device 100 in advance.

For example, the at least one point group detection sensor is incorporated in the mobile body. Here, the at least one point group detection sensor includes a plurality of point group detection sensors, and the plurality of point group detection sensors are incorporated in the mobile body. While the mobile body is running, due to vibration, deformation of the mobile body, or the like, a positional or angular displacement of a point group detection sensor may occur.

Point information combiner 102 combines a plurality of items of point information obtained from the plurality of point group detection sensors.

Noise remover 103 removes noise included in the plurality of items of point information. Specifically, noise remover 103 removes spatially or temporally isolated points as noise. For example, for each point, if a predetermined number of points or more are not present within an area within a certain distance from the point, noise remover 103 deletes point information that corresponds to the point from the plurality of items of point information. Also, for example, for each point, if a predetermined number of points or more are not present within an area within a certain distance from the point for a fixed period of time in the past, noise remover 103 deletes point information that corresponds to the point from the plurality of items of point information.

Closest point searcher 104 is an example of a searcher that searches for a second point present within a predetermined area from a first point (for example, a closest point around a first point) in a point group indicated by the plurality of items of point information. The predetermined area is determined by, for example, threshold value setter 111. Closest point searcher 104 searches for at least one second point. Specifically, closest point searcher 104 may search for only one second point, or may search for two or more second points. In the case where a three-dimensional gradient is calculated in the subsequent processing, two or more second points are required for the first point.

Height difference determiner 105 calculates a first difference that is a height difference between the first point and the second point, and determines, based on the calculated first difference, whether to set the second point as a point to be processed in the subsequent processing. For example, height difference determiner 105 determines whether to set the second point as a point to be processed in the subsequent processing by determining whether the first difference is greater than or equal to a threshold value. The threshold value is determined by, for example, threshold value setter 111. In the case where two or more second points are found as a result of search, height difference determiner 105 calculates a first difference for each of the two or more second points found as a result of search, and determines whether to set the second point as a point to be processed in the subsequent processing.

Elevation angle difference determiner 106 calculates a second difference that is an angle (also referred to as "elevation angle difference") formed by a straight line that connects a reference point and a first point and a straight line that connects the reference point and a second point, and determines, based on the calculated second difference, whether to set the second point as a point to be processed in the subsequent processing. The reference point may be an arbitrary point in the space in which the mobile body is present. Also, the reference point may be a point based on the mobile body. For example, the reference point may be a point in the mobile body, or may be a point that is outside the mobile body and is in a predetermined relationship with the mobile body. For example, the point in the mobile body may be at the position of at least one point group detection sensor incorporated in the mobile body, a position calculated from each of the positions of a plurality of point group detection sensors (for example, an intermediate position), the position of the center of gravity of the mobile body, or the like. Also, the point that is outside the mobile body and is in a predetermined relationship with the mobile body may be, for example, at a position that is spaced apart upward from the mobile body by a predetermined distance. Hereinafter, an example will be described in which the reference point is at the position of at least one point group detection sensor. In the case where one point group detection sensor is incorporated in the mobile body, elevation angle difference determiner 106 calculates a second difference by setting the one point group detection sensor as the reference point. In the case where a plurality of point group detection sensors are incorporated in the mobile body, elevation angle difference determiner 106 calculates second difference by setting any one of the plurality of point group detection sensors as the reference point. For example, elevation angle difference determiner 106 determines whether to set the second point as a point to be processed in the subsequent processing by determining whether the second difference is greater than or equal to a threshold value. The threshold value is determined by, for example, threshold value setter 111. In the case where two or more second points are found as a result of search, elevation angle difference determiner 106 calculates a second difference for each of the two or more second points found, and determines whether to set the second point as a point to be processed in the subsequent processing.

Height difference determiner 105 and elevation angle difference determiner 106 are an example of a calculator that calculates at least one of a first difference that is a height difference between the first point and the second point or a second difference that is an angle formed by a straight line that connects the reference point and the first point and a straight line that connects the reference point and the second point. Also, height difference determiner 105 and elevation angle difference determiner 106 are an example of a determiner that determines, based on at least one of the first difference or the second difference, whether to set the second point as a point to be processed in the subsequent processing.

Gradient calculation determiner 107 is an example of an outputter that outputs point information regarding the second point determined as a point to be processed in the subsequent processing to a processing unit that performs the subsequent processing. In the case where two or more second points are found as a result of search, gradient calculation determiner 107 outputs point information regarding those out of the two or more second points found as a result of search that were determined as points to be processed in the subsequent processing.

Gradient calculator 108 and obstacle point determiner 109 are an example of a processing unit that performs obstacle detection processing as the subsequent processing.

Gradient calculator 108 calculates a gradient based on the position of the first point and the position of the second point output from gradient calculation determiner 107.

If it is determined that the absolute value of the gradient calculated by gradient calculator 108 is greater than or equal to the threshold value, obstacle point determiner 109 determines the first point and the second point as obstacle points that constitute an obstacle. The threshold value is set by, for example, threshold value setter 111.

The processing operations performed by closest point searcher 104, height difference determiner 105, elevation angle difference determiner 106, gradient calculation determiner 107, gradient calculator 108, and obstacle point determiner 109 are repeated for each point of a point group indicated by a plurality of items of point information sensed by at least one point group detection sensor. Specifically, if there are 100 points in the point group indicated by a plurality of items of point information, first, one point is selected from among the 100 points as a first point, and search is performed with the remaining 99 points being set as candidates for second points. Then, from among the points set as candidates for second points, second points determined as points to be processed in the subsequent processing are output, and obstacle detection is performed for each of combinations of the first point and the second points. Next, another point is selected from among the 100 points as a first point, and the above-described processing is performed. The same is repeated for each of the 100 points.

Obstacle point group outputter 110 outputs all points that were determined as obstacle points as an obstacle point group. As a result, the mobile body or the like can perform automatic obstacle avoidance or the like.

Threshold value setter 111 acquires mobile body information that indicates mobile body characteristics, and determines a predetermined area based on the acquired mobile body information. The mobile body information may be stored in storage 112 or may be acquired from an external device.

For example, threshold value setter 111 acquires mobile body information that includes at least one of the height or the width of the mobile body, and determines a predetermined area based on at least one of the height or the width of the mobile body. Point information regarding points that are located in an area outside the height or the width of the mobile body may not be valid information in the subsequent processing. Accordingly, by determining the predetermined area as a search area for second points based on the height or the width of the mobile body, it is possible to effectively use point information regarding second points determined as point to be processed in the subsequent processing.

Also, threshold value setter 111 acquires mobile body information including vibration characteristics of the mobile body or an ability of the mobile body to pass over bumps, and determines a threshold value for determining the first difference, based on the vibration characteristics of the mobile body or the ability of the mobile body to pass over bumps. The ability to pass over bumps indicates a height from the ground contact surface over which the mobile body can pass. The ability to pass over bumps may be estimated based on climbing ability. Specifically, a height difference calculated from the angle of inclination indicated by the climbing ability and a predetermined distance in the horizontal direction (for example, a predetermined distance in the closest point search) may be determined as a threshold value for determining the first difference. By setting a maximum positional displacement of the point group detection sensor that may be caused by the vibration of the mobile body as the threshold value, it is possible to prevent a second point that may form a height difference with the first point caused by the vibration of the mobile body and cause a false detection from being set as a point to be processed in the subsequent processing. Alternatively, a maximum height difference over which the mobile body cannot pass may be set as the threshold value. By doing so, it is possible to prevent a second point that may form a height difference with the first point over which the mobile body can pass and may not cause a problem even when the second point is not set as a point to be processed in the subsequent processing from being set as a point to be processed in the subsequent processing. Also, a noise removal filter that utilizes moving average or the like may be used to prevent a second point as described above from being set as a point to be processed in the subsequent processing, but it is difficult to adjust a moving average parameter because it is a time-window width. On the other hand, in this aspect, an intuitive parameter such as the ability of the mobile body to pass over bumps can be used, and the threshold value can be easily adjusted. Also, as the threshold value for the first difference takes a greater value, the false detection rate decreases, and the undetection rate increases (or in other words, as the threshold value for the first difference takes a smaller value, the false detection rate increases, and the undetection rate decreases). Accordingly, by adjusting the threshold value for the first difference, it is possible to control the false detection rate and the undetection rate according to the ability of the mobile body, usage environment, or the like.

Also, threshold value setter 111 acquires mobile body information including vibration characteristics of the mobile body, and determines a threshold value for the second difference based on the vibration characteristics of the mobile body. By using a maximum angular displacement of the point group detection sensor that may be caused due to vibration of the mobile body as the threshold value, it is possible to prevent a second point whose elevation angle difference corresponds to an elevation angle difference caused due to vibration of the mobile body and that may cause a false detection from being determined as a point to be processed in the subsequent processing. Also, as the threshold value for the second difference takes a greater value, the false detection rate decreases, and the undetection rate increases (or in other words as the threshold value for the second difference takes a smaller value, the false detection rate increases, and the undetection rate decreases). Accordingly, by adjusting the threshold value for the second difference, it is possible to control the false detection rate and the undetection rate according to the ability of the mobile body, usage environment, or the like.

Also, threshold value setter 111 sets a gradient that should be determined as an obstacle as the threshold value.

Height difference determiner 105 and elevation angle difference determiner 106 calculate the proportion of second points that are determined to be not set as points to be processed in the subsequent processing, and storage 112 stores the calculated proportion for each scene (specifically, on a time basis for each location) as a history. For example, the proportion is stored for each position or position attribute sensed by at least one point group detection sensor as the history. The position attribute refers to, for example, an attribute for making a distinction according to the degree of vibration generated while the mobile body is moving, and specifically is a road attribute, a highway attribute, or the like.

Notifier 113 outputs a notification to storage 112 when it is determined that the proportion of second points determined to be not set as points to be processed in the subsequent processing is different from the proportion in the history. A detailed description of notifier 113 will be given later.

Next, an operation performed by an information processing device will be described with reference to FIG. 5.

FIG. 5 is a flowchart illustrating an example of an information processing method. The information processing method is executed by information processing device 100 (computer), and thus FIG. 5 is also a flowchart illustrating an example of an operation performed by information processing device 100.

First, point information acquirer 101 acquires a plurality of items of point information including position information regarding points sensed by at least one point group detection sensor (step S101).

Next, closest point searcher 104 searches for a second point that is present within a predetermined area from the first point that is present in a point group indicated by the plurality of items of point information (step S102).

Next, height difference determiner 105 and elevation angle difference determiner 106 calculate at least one of a first difference that is a height difference between the first point and the second point or a second difference that is an angle formed by a straight line that connects the reference point and the first point and a straight line that connects the reference point and the second point (step S103).

Next, height difference determiner 105 and elevation angle difference determiner 106 determines, based on at least one of the first difference or the second difference, whether to set the second point as a point to be processed in the subsequent processing (step S104).

Then, gradient calculation determiner 107 outputs point information regarding the second points that were determined as points to be processed in the subsequent processing (step S105).

Hereinafter, an obstacle detection operation performed by information processing device 100 will be described in detail.

FIG. 6 is a flowchart illustrating an example of an obstacle detection operation performed by information processing device 100.

Information processing device 100 performs processing operations of steps S202 to S210 for each of all points within the obstacle detection area sensed by the plurality of point group detection sensors (step S201). Information processing device 100 selects one from among all points within the obstacle detection area.

Closest point searcher 104 sets the selected point as a first point, and searches for a closest point (specifically, a second point) within a predetermined area from the first point (step S202). Hereinafter, the first point will be referred to as "target point", and the second point will be referred to as "closest point". The operation performed by closest point searcher 104 in step S202 will be described in detail with reference to FIGS. 7 and 8.

FIG. 7 is a flowchart illustrating a specific example of an operation performed by closest point searcher 104.

Closest point searcher 104 performs processing operations in steps S302 to S304 for each of all points within the obstacle detection area excluding the target point (step S301). Closest point searcher 104 selects one (referred to as "additional point") from among all points excluding the target point.

Closest point searcher 104 calculates a distance between the target point and the selected additional point (step S302). Each point includes point information including position information, and thus the point-to-point distance can be calculated from the position information of each point.

Next, closest point searcher 104 determines whether the calculated distance is greater than or equal to a threshold value (step S303). As described above, the threshold value is a value within a predetermined area determined by threshold value setter 111 based on the mobile body information including at least one of the height or the width of the mobile body.

If it is determined that the calculated distance is less than the threshold value (No in step S303), closest point searcher 104 determines the selected additional point as a closest point (step S304).

On the other hand, if it is determined that the calculated distance is greater than or equal to the threshold value (Yes in step S303), closest point searcher 104 determines that the selected additional point is not a closest point.

Then, closest point searcher 104 selects an unselected point from among all points excluding the target point as an additional point, and performs processing operations of steps S302 to S304 for the additional point. Closest point searcher 104 performs processing operations of steps S302 to S304 to search all points excluding the target point for one or more closest points.

FIG. 8 is a diagram showing an example of a closest point and a non-closest point.

As shown in FIG. 8, a point with distance d from the target point that is less than threshold value D is determined as a closest point, and a point with a distance from the target point that is greater than or equal to threshold value D is determined as a non-closest point, instead of being determined as a closest point.

Closest point searcher 104 may be configured to remap all points within the obstacle detection area on a spherical grid, a cylindrical grid, or a polygonal grid about the mobile body, and determine points that are present on adjacent grids or neighbor grids as closest points. With this configuration, the calculation load during closest point search can be suppressed.

Returning to the description of FIG. 6, for each of one or more closest points found as a result of search performed by closest point searcher 104, height difference determiner 105 makes a determination based on the height difference between the target point and the closest point (step S203). The operation performed by height difference determiner 105 in step S203 will be described in detail with reference to FIGS. 9 and 10.

FIG. 9 is a flowchart illustrating a specific example of an operation performed by height difference determiner 105.

Height difference determiner 105 performs processing operations of steps S402 to S404 for each of all closest points found as a result of search for the closest points of the target point (step S401). Height difference determiner 105 selects one from among all closest points found as a result of search.

Height difference determiner 105 calculates a height difference between the target point and the selected closest point (step S402). Each point includes point information including position information, and thus the point-to-point height difference can be calculated from the position information of each point.

Height difference determiner 105 determines whether the calculated height difference is greater than or equal to a threshold value (step S403). As described above, the threshold value is a threshold value determined by threshold value setter 111 based on the mobile body information that includes the vibration characteristics of the mobile body or the ability of the mobile body to pass over bumps. In step S403, height difference determiner 105 determines, based on the height difference, whether the closest point is a point to be processed in the obstacle detection processing.

If it is determined that the calculated height difference is less than the threshold value (No in step S403), height difference determiner 105 excludes the selected closest point from being a point to be processed in the obstacle detection processing (step S404). Specifically, height difference determiner 105 determines a closest point with a height difference with the target point being less than a threshold value as not being a point to be processed in the obstacle detection processing.

On the other hand, if it is determined that the calculated height difference is greater than or equal to the threshold value (Yes in step S403), height difference determiner 105 does not exclude the selected closest point from being a point to be processed in the obstacle detection processing. Specifically, height difference determiner 105 determines a closest point with a height difference with the target point being greater than or equal to the threshold value as being a point to be processed in the obstacle detection processing.

Then, height difference determiner 105 selects an unselected closest point from among all closest points, and performs processing operations of steps S402 to S404 for the selected closest point. Height difference determiner 105 performs processing operations of steps S402 to S404 for each of all closest points with respect to the target point, and sequentially excludes a closest point among all closest points that has a height difference with the target point that is less than the threshold value from being a point to be processed in the obstacle detection processing.

FIG. 10 is a diagram showing an example of a valid closest point and an invalid closest point determined based on a height difference.

As shown in FIG. 10, a closest point with a height difference to the target point that is less than threshold value H is determined as a closest point excluded from being a point to be processed in the obstacle detection processing (specifically, determined as an invalid closest point), and a closest point with a height difference to the target point that is greater than or equal to threshold value H is determined as a closest point not excluded from being a point to be processed in the obstacle detection processing (specifically, determined as a valid closest point).

Returning to the description of FIG. 6, height difference determiner 105 extracts closest points whose height difference to the target point is greater than or equal to a threshold value (step S204). That is, as described with reference to FIG. 9, height difference determiner 105 extracts, for the obstacle detection processing, closest points that were not excluded from being points to be processed in the obstacle detection processing.

Next, elevation angle difference determiner 106 makes a determination for each of one or more closest points found as a result of the search performed by closest point searcher 104, based on the elevation angle differences of the target point and the closest point (step S205). The operation performed by elevation angle difference determiner 106 in step S205 will be described in detail with reference to FIGS. 11 and 12.

FIG. 11 is a flowchart illustrating a specific example of an operation performed by elevation angle difference determiner 106.

Elevation angle difference determiner 106 performs processing operations of steps S502 to S504 for each of all closest points found as a result of search for the closest points of the target point (step S501). Elevation angle difference determiner 106 selects one closest point from among all of the closest points found as a result of search.

Elevation angle difference determiner 106 calculates an elevation angle difference between the target point and the reference point and an elevation angle difference between the target point and the selected closest point (step S502). As described above, the position of any one of the plurality of point group detection sensors provided in the mobile body is set as the reference point. Also, each point includes point information including position information, and thus the point-to-point elevation angle difference with respect to the reference point can be calculated from the position information of each point.

Elevation angle difference determiner 106 determines whether the calculated elevation angle difference is greater than or equal to a threshold value (step S503). As described above, the threshold value is a threshold value determined by threshold value setter 111 based on the mobile body information that includes the vibration characteristics of the mobile body. In step S503, elevation angle difference determiner 106 determines, based on the elevation angle difference, whether the closest point is a point to be processed in the obstacle detection processing.

If it is determined that the calculated elevation angle difference is less than the threshold value (No in step S503), elevation angle difference determiner 106 excludes the selected closest point from being a point to be processed in the obstacle detection processing (step S504). Specifically, elevation angle difference determiner 106 determines that a closest point with an elevation angle difference to the target point with respect to the reference point that is less than the threshold value is not a point to be processed in the obstacle detection processing.

On the other hand, if it is determined that the calculated elevation angle difference is greater than or equal to the threshold value (Yes in step S503), elevation angle difference determiner 106 does not exclude the selected closest point from the points to be processed in the obstacle detection processing. Specifically, elevation angle difference determiner 106 determines that a closest point with an elevation angle difference to the target point relative to the reference point that is greater than or equal to the threshold value is a point to be processed in the obstacle detection processing.

Then, elevation angle difference determiner 106 selects an unselected closest point from among all closest point, and performs processing operations of steps S502 to S504 for the selected closest point. Elevation angle difference determiner 106 performs processing operations of steps S502 to S504 for each of all closest points of the target point, and sequentially excludes a closest point among all closest points that has an elevation angle difference to the target point that is less than the threshold value from being a point to be processed in the obstacle detection processing.

FIG. 12 is a diagram showing an example of a valid closest point and an invalid closest point based on the elevation angle difference determined.

As shown in FIG. 12, a closest point with an elevation angle difference to the target point with respect to the reference point that is less than threshold value Ψ is determined as a closest point excluded from being a point to be processed in the obstacle detection processing (specifically, determined as an invalid closest point), and a closest point with elevation angle difference ψ to the target point that is greater than or equal to threshold value Ψ is determined as a closest point not excluded from being a point to be processed in the obstacle detection processing (specifically, determined as a valid closest point).

Returning to the description of FIG. 6, elevation angle difference determiner 106 extracts closest points whose elevation angle difference to the target point with respect to the reference point is greater than or equal to a threshold value (step S206). That is, as described in FIG. 11, elevation angle difference determiner 106 extracts, for the obstacle detection processing, closest points that were not excluded from being points to be processed in the obstacle detection processing.

The order in which steps S203 and S204 and steps S205 and S206 are performed may be reversed, or steps S203 and S204 and steps S205 and S206 may be performed in parallel. In the case where these steps are performed in the following order: step S203, step S204, step S205, and step S206, elevation angle difference determiner 106 does not necessarily need to make a determination based on the elevation angle difference for each of one or more closest points found as a result of the search performed by closest point searcher 104, and may make a determination based on the elevation angle difference for each of the closest points extracted by height difference determiner 105. Also, in the case where these steps are performed in the following order: step S205, step S206, step S203, and step S204, height difference determiner 105 does not necessarily need to make a determination based on the height difference for each of one or more closest points found as a result of the search performed by closest point searcher 104, and may make a determination based on the height difference for each of the closest points extracted by elevation angle difference determiner 106.

Next, gradient calculation determiner 107 determines whether there are a sufficient number of closest points that were not excluded from being points to be processed in the obstacle detection processing and were extracted by height difference determiner 105 and elevation angle difference determiner 106 (step S207). The expression "there are a sufficient number of closest points" means that there are a required number of closest points to perform gradient calculation. The operation performed by gradient calculation determiner 107 in step S207 will be described in detail with reference to FIG. 13.

FIG. 13 is a flowchart illustrating a specific example of an operation performed by gradient calculation determiner 107.

Gradient calculation determiner 107 counts the closest points that have been determined as points to be processed in the obstacle detection processing (step S601). For example, gradient calculation determiner 107 is configured to not double count overlapping closest points when closest points extracted by height difference determiner 105 and closest points extracted by elevation angle difference determiner 106 are duplicated with each other.

Gradient calculation determiner 107 determines whether the counted number is greater than or equal to a threshold value (step S602). In the case where a two-dimensional gradient is calculated, the threshold value may be set to 1 because the gradient can be calculated by using the target point and at least one closest point. In the case where a three-dimensional gradient is calculated, the threshold value may be set to 2 because the gradient can be calculated by using the target point and at least two closest points.

If it is determined that the counted number is greater than or equal to the threshold value (Yes in step S602), or in other words, if it is determined that there are a sufficient number of closest points that were not excluded from being points to be processed in the obstacle detection processing (Yes in step S207 shown in FIG. 6), gradient calculation determiner 107 outputs point information regarding points that were determined as points to be processed in the obstacle detection processing to a processing unit that performs obstacle detection processing, and processing of step S208 shown in FIG. 6 is performed.

If it is determined that the counted number is less than the threshold value (No in step S602), or in other words, if it is determined that there are an insufficient number of closest points that were not excluded from being points to be processed in the obstacle detection processing (No in step S207 shown in FIG. 6), gradient calculation determiner 107 determines that the currently selected target point and the closest points of the selected target point are not points to be processed in the obstacle detection processing, and then selects one from among all unselected points within the obstacle detection area as a target point, and the loop from step S201 shown in FIG. 6 is performed.

Returning to the description of FIG. 6, if it is determined that there are a sufficient number of closest points that were not excluded from being points to be processed in the obstacle detection processing (Yes in step S207), gradient calculator 108 performs gradient calculation (step S208). The operation performed by gradient calculator 108 in step S208 will be described in detail with reference to FIGS. 14 and 15.

FIG. 14 is a flowchart illustrating a specific example of an operation performed by gradient calculator 108**.**

Gradient calculator 108 performs processing in step S702 for each of all closest points (specifically, valid closest points) determined as points to be processed in the obstacle detection processing (step S701). Gradient calculator 108 selects one from among all valid closest points.

Gradient calculator 108 calculates a two-point gradient between the target point and the selected valid closest point (step S702). A method for calculating a two-point gradient will be described with reference to FIG. 15.

FIG. 15 is a diagram illustrating a method for calculating a two-point gradient.

As shown in FIG. 15, two-point gradient g between a target point and a valid closest point can be calculated by dividing height difference h between the target point and the valid closest point by horizontal distance p between the target point and the valid closest point.

Returning to the description of FIG. 14, gradient calculator 108 selects an unselected closest point from among all valid closest points, and performs processing of step S702 for the selected closest point. That is, gradient calculator 108 calculates, for each of all valid closest points, a two-point gradient with respect to the target point.

Then, gradient calculator 108 selects a two-point gradient that has the maximum absolute value from among all of the calculated two-point gradients, and adopts the selected two-point gradient as the gradient for the current target point selected in step S201 (step S703). Gradient calculator 108 may adopt a two-point gradient between the target point and a closest point that is closest to the target point among all valid closest points as the gradient of the target point currently selected in step S201. Alternatively, gradient calculator 108 may adopt an average value of all two-point gradients calculated as the gradient of the target point currently selected in step S201.

Returning to the description of FIG. 6, obstacle point determiner 109 determines whether the gradient adopted by gradient calculator 108 is large (step S209). The operation performed by obstacle point determiner 109 in step S209 will be described in detail with reference to FIG. 16.

FIG. 16 is a flowchart illustrating a specific example of an operation performed by obstacle point determiner 109.

Obstacle point determiner 109 compares the absolute value of the adopted gradient with a threshold value (step S801) to determine whether the absolute value of the gradient is greater than or equal to the threshold value (step S802). As described above, the threshold value is a threshold value set by threshold value setter 111.

If it is determined that the absolute value of the gradient is greater than or equal to the threshold value (Yes in step S802), or in other words, if it is determined that the gradient adopted by gradient calculator 108 is greater, (Yes in step S209 shown in FIG. 6), obstacle point determiner 109 performs the processing in step S210 shown in FIG. 6.

If it is determined that the absolute value of the gradient is less than the threshold value (No in step S802), or in other words, if it is determined that the gradient adopted by gradient calculator 108 is small (No in step S209 shown in FIG. 6), obstacle point determiner 109 determines that the currently selected target point and the closest points of the selected target point are not obstacle points that constitute an obstacle, and then selects one from among all unselected points within the obstacle detection area as a target point, and the loop from step S201 shown in FIG. 6 is performed.

Returning to the description of FIG. 6, if it is determined that the gradient adopted by gradient calculator 108 is large (Yes in step S209), obstacle point determiner 109 determines that the target point selected in step S201 and the closest points of the selected target point as obstacle points that constitute an obstacle (step S210).

Then, the processing is performed from step S202 by using an unselected point from among all points within the obstacle detection area as the target point, an obstacle point group is extracted from all points within the obstacle detection area.

Next, an operation performed by notifier 113 will be described in detail with reference to FIGS. 17 and 18.

FIG. 17 is a flowchart illustrating a specific example of an operation performed by notifier 113.

Notifier 113 calculates the proportion of closest points that were determined to be not set as points to be processed in the obstacle detection processing performed this time for a scene (step S901). Specifically, notifier 113 calculates, for each target point, the proportion of closest points that were determined as invalid relative to all closest points, and calculates the average.

Notifier 113 compares the currently calculated proportion with the proportion calculated in the past (step S902). The proportion calculated in the past is stored in storage 112. For example, notifier 113 compares the currently calculated proportion with the proportion calculated in the past for a scene that is the same as the current scene (specifically, for a scene in which the position or the position attribute matches).

Notifier 113 determines whether the currently calculated proportion is an outlier as compared with the proportion calculated in the past (step S903). An example in which the currently calculated proportion is an outlier as compared with the proportion calculated in the past will be described with reference to FIG. 18.

FIG. 18 is a diagram showing an example in which the currently calculated proportion is an outlier as compared with the proportion calculated in the past. FIG. 18 shows a distribution of the proportion of closest points that were determined to be not set as points to be processed in the obstacle detection processing when the mobile body passed through location A that is the same location as the mobile body passes this time. This distribution can be calculated from the proportion of closest points that were determined to be not set as points to be processed in the obstacle detection processing, the proportion being stored as the history.

As shown in FIG. 18, it can be seen that the proportion of closest points that were determined as invalid when the mobile body passed location A in the past is low, but the proportion of closest points that were determined as invalid when the mobile body passes the same location A this time is high. That is, it can be seen that the currently calculated proportion is an outlier as compared with the proportion calculated in the past.

Returning to the description of FIG. 17, if it is determined that the currently calculated proportion is an outlier as compared with the proportion calculated in the past (Yes in step S903), notifier 113 outputs a maintenance alert as a notification (step S904). The reason is as follows. The fact that it is determined that the currently calculated proportion is an outlier as compared with the proportion calculated in the past despite the fact that the mobile body is currently passing through location A that is the same location as the mobile body passed through in the past means that the point group detection sensor and the like may have a problem. If it is determined that the currently calculated proportion is not an outlier as compared with the proportion calculated in the past (No in step S903), notifier 113 ends the processing without outputting a notification.

In FIG. 18, an example has been described in which the proportion obtained for the same location is compared, but the proportion does not necessarily need to be obtained for the same location, and the proportion obtained for the same attribute (for example, road, highway, or the like) may be compared.

As described above, in the case where the proportion of second points determined to be not set as points to be processed in the subsequent processing is different from the proportion in the history despite the fact that the scene is the same (for example, for a scene in which the position or the position attribute matches) (in the case where, for example, the proportion in the current history is an outlier as compared with the proportion in the past history), the point group detection sensor and the like may have a problem. Accordingly, in this case, by outputting a notification, it is possible to cause the passengers, the manager, and the like of the mobile body to recognize, for example, the problem in the point group detection sensor or the like.

Information processing device 100 may calculate a distance between the point group detection sensor (reference point) and the target point or a distance between the point group detection sensor and the closest point, and determine whether to calculate at least one of height difference or elevation angle difference, according to the distance between the reference point and the target point or the distance between the reference point and the closest point. This configuration will be described with reference to FIG. 19.

FIG. 19 is a flowchart illustrating an example of an obstacle detection operation performed by information processing device 100 according to an embodiment of the invention. The processing operations in steps S201 to S210 shown in FIG. 19 are the same as those shown in FIG. 6, and thus a description thereof is omitted here.

Information processing device 100 calculates a distance between the reference point and the target point or the closest point found as a result of search, and determines whether the distance is short (for example, whether the distance is less than or equal to a threshold value) (step S211). If it is determined that the distance between the reference point and the target point or the closest point found as a result of search (Yes in step S211), processing operations from steps S203 to S206 are performed. If it is determined that the distance between the reference point and the target point or the closest point found as a result of search is long (No in step S211), processing operations from steps S203 to S206 are not performed. The target point and the closest point are located at positions at substantially the same distance from the reference point, and thus it is sufficient that either the distance between the target point and the reference point or the distance between the closest point and the reference point is calculated.

The spacing between points in a point group to be sensed increases as the distance from the reference point increases. In the case where second points in the point group are determined to be not set as points to be processed in the subsequent processing, the number of points that can be used in the subsequent processing decreases as the distance from the reference point increases, which makes it difficult to perform the subsequent processing. Accordingly, in the case where the distance between the reference point and the first point or the distance between the reference point and the second point is long, at least one of the first difference or the second difference is not calculated. Specifically, the processing of determining whether to set the closest point as a point to be processed in the obstacle detection processing is skipped, and the obstacle detection processing is performed without fail. With this configuration, second points that are spaced apart from the reference point can be determined as points to be processed in the subsequent processing, and it is therefore possible to suppress a situation in which points that are spaced apart from the reference point are not used in the subsequent processing.

Information processing device 100 may determine whether the point group detection sensor that sensed the target point matches the point group detection sensor that sensed the closest point, and may calculate at least one of height difference or elevation angle difference if it is determined that the point group detection sensor that sensed the target point does not match the point group detection sensor that sensed the closest point. This configuration will be described with reference to FIG. 20.

FIG. 20 is a flowchart illustrating an example of an obstacle detection operation performed by information processing device 100 according to an embodiment of the invention. The processing operations in steps S201 to S210 shown in FIG. 20 are the same as those shown in FIG. 6, and thus a description thereof is omitted here.

Information processing device 100 determines whether the closest point found as a result of search has been observed by a point group detection sensor that is different from the point group detection sensor that observed the target point (step S212). If it is determined that the closest point found as a result of search has been observed by a different point group detection sensor (Yes in step S212), processing operations from steps S203 to S206 are performed. If it is determined that the closest point found as a result of search has not been observed by a different point group detection sensor (No in step S211), processing operations from steps S203 to S206 are not performed.

In the case where sensing is performed by using a plurality of point group detection sensors, a target point and a closest point sensed by different point group detection sensors are more susceptible to the displacement of the point group detection sensors as compared with a target point and a closest point sensed by the same point group detection sensor, and thus a malfunction is more likely to occur in the obstacle detection processing. For this reason, in the case where the point group detection sensor that sensed the target point does not match the point group detection sensor that sensed the closest point, at least one of the height difference or the elevation angle difference is calculated. In other words, in the case where the point group detection sensor that sensed the target point matches the point group detection sensor that sensed the closest point, at least one of the height difference or the elevation angle difference is not calculated. Specifically, the processing of determining whether to set the closest point as a point to be processed in the obstacle detection processing is skipped, and the obstacle detection processing is performed without fail. With this configuration, as many second points that are unlikely to cause a malfunction in the obstacle detection processing as possible can be determined as points to be processed in the obstacle detection processing.

As described above, when one of the point group detection sensors is positionally or angularly displaced due to vibration, the position information indicating the positions of points that were sensed by the point group detection sensor may be different from the actual positions of the points. In this case, in the subsequent processing that includes, for example, processing that uses gradients, a malfunction such as a false detection (for example, false obstacle detection) in which a steep gradient is detected despite the fact that there is actually no steep gradient may occur. However, it is often the case that the positional or angular displacement of the point group detection sensor caused due to vibration associated with the movement of the mobile body is very small. For this reason, it is often the case that a height difference between two points that may be detected as forming a steep gradient or an angle formed by a straight line that connects the reference point and one of the two points and a straight line that connects the reference point and the other one of the two points caused by the positional or angular displacement of the point group detection sensor is also very small. Accordingly, in the present disclosure, a determination as to whether to set the second point as a point to be processed in the subsequent processing is made based on at least one of a first difference or a second difference, the first difference being a height difference between a first point and a second point within a predetermined area sensed by the point group detection sensor, and the second difference being an angle formed by a straight line that connects the reference point and the first point and a straight line that connects the reference point and the second point. With this configuration, it is possible to prevent a situation in which a second point that is falsely determined as forming a steep gradient due to the positional or angular displacement of the point group detection sensor is determined as a point to be processed in the subsequent processing, despite the fact that the first difference or the second difference is very small. Accordingly, it is possible to suppress the occurrence of a malfunction in the subsequent processing caused by the displacement of the point group detection sensor without measuring the displacement of the point group detection sensor.

### (Other Embodiments)

Up to here, the information processing method and information processing device 100 according to one or more aspects of the present disclosure have been described by way of the embodiment, but the present invention is defined by the claims.

### [Industrial Applicability]

The present disclosure is applicable to a device that performs processing by using point information regarding points sensed by a point group detection sensor such as a LiDAR sensor.

### [Reference Signs List]

- 100: information processing device
- 101: point information acquirer
- 102: point information combiner
- 103: noise remover
- 104: closest point searcher
- 105: height difference determiner
- 106: elevation angle difference determiner
- 107: gradient calculation determiner
- 108: gradient calculator
- 109: obstacle point determiner
- 110: obstacle point group outputter
- 111: threshold value setter
- 112: storage
- 113: notifier

## Claims

1. An information processing method executed by a computer, the information processing method comprising:
acquiring (S101) a plurality of items of point information including position information indicating positions of points sensed by at least one point group detection sensor provided in a mobile body;
searching (S102) for at least one second point that is present within a predetermined area from a corresponding at least one first point that is present within a point group indicated by the plurality of items of point information;
for each of the at least one second point and corresponding first point, calculating (S103) at least one of a first difference or a second difference, the first difference being a height difference between the first point and the second point, and the second difference being an angle formed by a straight line that connects a reference point and the first point and a straight line that connects the reference point and the second point;
determining (S104), based on at least one of the first differences or the second differences, whether to set the second point as a point to be processed in subsequent processing; **characterized in that** the method further comprises counting the at least one second points set as a point to be processed;
determining whether the counted number is greater than or equal to a first threshold value;
if the counted number is greater than or equal to the first threshold value then, for each of the a least one second point and corresponding first point, calculating a gradient between the first point and the second point when the second point is determined to be set as the point to be processed in the subsequent processing; and
determining the first point and the second point as obstacle points corresponding to an obstacle, when the absolute value of the gradient calculated is equal to or greater than a second threshold value.

2. The information processing method according to claim 1, further comprising, for each of the at least one second point and corresponding first point:
calculating a distance between a reference point and the first point or a distance between the reference point and the second point; and
determining whether to calculate at least one of the first difference or the second difference based on the distance between the reference point and the first point or the distance between the reference point and the second point.

3. The information processing method according to claim 1 or 2, wherein the at least one point group detection sensor comprises a plurality of point group detection sensors,
the information processing method further includes:
determining whether a point group detection sensor that sensed the first point matches a point group detection sensor that sensed the second point; and
when it is determined that the point group detection sensor that sensed the first point does not match the point group detection sensor that sensed the second point, calculating at least one of the first difference or the second difference.

4. The information processing method according to any one of claims 1 to 3, further comprising:
calculating a proportion of second points determined to be not set as the point to be processed in the subsequent processing, the second points each being the second point;
storing the proportion calculated, for each scene as a history;
determining whether different proportions are stored for a same scene as the history, each of the proportions being the proportion of second points determined to be not set as the point to be processed in the subsequent processing; and
when it is determined that different proportions are stored as the history, outputting a notification.

5. The information processing method according to claim 4,
wherein the scene includes a position,
the history is stored for each position or position attribute sensed by the at least one point group detection sensor, and
whether different proportions are stored as the history is determined for scenes whose positions or position attributes match each other.

6. The information processing method according to any one of claims 1 to 5, further comprising:
acquiring mobile body information that indicates characteristics of the mobile body; and
determining the predetermined area based on the mobile body information.

7. The information processing method according to claim 6,
wherein the mobile body information includes at least one of a height or a width of the mobile body, and
the predetermined area is determined based on at least one of the height or the width of the mobile body.

8. The information processing method according to claim 6 or 7,
wherein whether to set the second point as the point to be processed in the subsequent processing is determined by determining whether the first difference is greater than or equal to a third threshold value,
the mobile body information includes vibration characteristics of the mobile body or an ability of the mobile body to pass over bumps, and
the third threshold value for the first difference is determined based on the vibration characteristics of the mobile body or the ability of the mobile body to pass over bumps.

9. The information processing method according to any one of claims 6 to 8,
wherein whether to set the second point as the point to be processed in the subsequent processing is determined by determining whether the second difference is greater than or equal to a fourth threshold value,
the mobile body information includes vibration characteristics of the mobile body, and
the fourth threshold value for the second difference is determined based on the vibration characteristics of the mobile body.

10. The information processing method according to any one of claims 1 to 9,
wherein the subsequent processing includes object detection processing.

11. An information processing device (100) comprising:
an acquirer (101) that acquires a plurality of items of point information including position information indicating positions of points sensed by at least one point group detection sensor provided in a mobile body;
a searcher (104) that searches for at least one second point that is present within a predetermined area from a corresponding at least one first point that is present within a point group indicated by the plurality of items of point information;
a calculator (105, 106) that calculates, for each of the at least one second point and corresponding first point, at least one of a first difference or a second difference, the first difference being a height difference between the first point and the second point, and the second difference being an angle formed by a straight line that connects a reference point and the first point and a straight line that connects the reference point and the second point;
a determiner (107) that:
determines, based on at least one of the first difference or the second difference, whether to set the second point as a point to be processed in subsequent processing,
the information processing device **characterized in that**: the determiner (107) counts the at least one second point set as a point to be processed, and
determines whether the counted number is greater than or equal to a first threshold value; and
a gradient calculator (108) that, if the counted number is greater than or equal to the first threshold value then, for each of the a least one second point and corresponding first point, calculates a gradient between the first point and the second point when the second point is determined to be set as the point to be processed in the subsequent processing; and
an obstacle point determiner (109) that determines the first point and the second point as obstacle points corresponding to an obstacle, when the absolute value of the gradient calculated is equal to or greater than a second threshold value.

## Patentansprüche

1. Informationsverarbeitungsverfahren, das durch einen Computer ausgeführt wird, wobei das Informationsverarbeitungsverfahren Folgendes umfasst:
Erfassen (S101) einer Vielzahl von Punktinformationen einschließlich Positionsinformationen, die Positionen von Punkten angeben, die durch mindestens einen in einem beweglichen Körper bereitgestellten Punktgruppenerkennungssensor wahrgenommen werden;
Suchen (S102) nach mindestens einem zweiten Punkt, der innerhalb eines vorbestimmten Bereichs von einem entsprechenden mindestens einen ersten Punkt aus vorhanden ist, der innerhalb einer Punktgruppe vorhanden ist, die durch die Vielzahl von Punktinformationen angegeben wird;
für jeden von dem mindestens einen zweiten Punkt und dem entsprechenden ersten Punkt, Berechnen (S103) mindestens einer von einer ersten Differenz oder einer zweiten Differenz, wobei die erste Differenz eine Höhendifferenz zwischen dem ersten Punkt und dem zweiten Punkt ist und die zweite Differenz ein Winkel ist, der durch eine gerade Linie, die einen Referenzpunkt und den ersten Punkt verbindet, und eine gerade Linie, die den Referenzpunkt und den zweiten Punkt verbindet, gebildet wird;
Bestimmen (S104), basierend auf mindestens einer von den ersten Differenzen oder den zweiten Differenzen, ob der zweite Punkt als ein in einer nachfolgenden Verarbeitung zu verarbeitender Punkt festgelegt werden soll;
**dadurch gekennzeichnet, dass** das Verfahren weiter umfasst:
Zählen der mindestens einen zweiten Punkte, die als zu verarbeitender Punkt festgelegt wurden;
Bestimmen, ob die gezählte Zahl größer oder gleich einem ersten Schwellenwert ist;
wenn die gezählte Zahl größer oder gleich dem ersten Schwellenwert ist, dann Berechnen, für jeden von dem mindestens einen zweiten Punkt und dem entsprechenden ersten Punkt, eines Gradienten zwischen dem ersten Punkt und dem zweiten Punkt, wenn für den zweiten Punkt bestimmt wird, dass er als der in der nachfolgenden Verarbeitung zu verarbeitende Punkt festzulegen ist; und
Bestimmen des ersten Punktes und des zweiten Punktes als Hindernispunkte, die einem Hindernis entsprechen, wenn der Absolutwert des berechneten Gradienten gleich oder größer als ein zweiter Schwellenwert ist.

2. Informationsverarbeitungsverfahren nach Anspruch 1, das ferner für jeden von dem mindestens einen zweiten Punkt und dem entsprechenden ersten Punkt Folgendes umfasst:
Berechnen eines Abstands zwischen einem Referenzpunkt und dem ersten Punkt oder eines Abstands zwischen dem Referenzpunkt und dem zweiten Punkt; und
Bestimmen, ob mindestens eine von der ersten Differenz oder der zweiten Differenz basierend auf dem Abstand zwischen dem Referenzpunkt und dem ersten Punkt oder dem Abstand zwischen dem Referenzpunkt und dem zweiten Punkt berechnet werden soll.

3. Informationsverarbeitungsverfahren nach Anspruch 1 oder 2,
wobei der mindestens eine Punktgruppenerkennungssensor eine Vielzahl von Punktgruppenerkennungssensoren umfasst,
das Informationsverarbeitungsverfahren weiter umfasst:
Bestimmen, ob ein Punktgruppenerkennungssensor, der den ersten Punkt wahrgenommen hat, mit einem Punktgruppenerkennungssensor übereinstimmt, der den zweiten Punkt wahrgenommen hat; und
wenn bestimmt wird, dass der Punktgruppenerkennungssensor, der den ersten Punkt wahrgenommen hat, nicht mit dem Punktgruppenerkennungssensor übereinstimmt, der den zweiten Punkt wahrgenommen hat, Berechnen mindestens einer von der ersten Differenz oder der zweiten Differenz.

4. Informationsverarbeitungsverfahren nach einem der Ansprüche 1 bis 3, das weiter umfasst:
Berechnen eines Anteils von zweiten Punkten, für die bestimmt wurde, dass sie nicht als der in der nachfolgenden Verarbeitung zu verarbeitende Punkt festzulegen sind, wobei die zweiten Punkte jeweils der zweite Punkt sind;
Speichern des berechneten Anteils für jede Szene als eine Historie;
Bestimmen, ob unterschiedliche Anteile für eine gleiche Szene als die Historie gespeichert sind, wobei jeder der Anteile der Anteil von zweiten Punkten ist, für die bestimmt wurde, dass sie nicht als der in der nachfolgenden Verarbeitung zu verarbeitende Punkt festzulegen sind; und
wenn bestimmt wird, dass unterschiedliche Anteile als die Historie gespeichert sind, Ausgeben einer Benachrichtigung.

5. Informationsverarbeitungsverfahren nach Anspruch 4,
wobei die Szene eine Position enthält,
die Historie für jede Position oder jedes Positionsattribut gespeichert wird, die/das durch den mindestens einen Punktgruppenerkennungssensor wahrgenommen wird, und
für Szenen, deren Positionen oder Positionsattribute miteinander übereinstimmen, bestimmt wird, ob unterschiedliche Anteile als die Historie gespeichert werden.

6. Informationsverarbeitungsverfahren nach einem der Ansprüche 1 bis 5, das weiter umfasst:
Erfassen von Informationen über den beweglichen Körper, die Eigenschaften des beweglichen Körpers angeben; und
Bestimmen des vorbestimmten Bereichs basierend auf den Informationen über den beweglichen Körper.

7. Informationsverarbeitungsverfahren nach Anspruch 6,
wobei die Informationen über den beweglichen Körper mindestens eines von einer Höhe oder einer Breite des beweglichen Körpers umfassen, und
der vorbestimmte Bereich basierend auf mindestens einem von der Höhe oder der Breite des beweglichen Körpers bestimmt wird.

8. Informationsverarbeitungsverfahren nach Anspruch 6 oder 7,
wobei, ob der zweite Punkt als der in der nachfolgenden Verarbeitung zu verarbeitende Punkt festgelegt wird, bestimmt wird, indem bestimmt wird, ob die erste Differenz größer oder gleich einem dritten Schwellenwert ist,
die Informationen über den beweglichen Körper Vibrationseigenschaften des beweglichen Körpers oder eine Fähigkeit des beweglichen Körpers, über Unebenheiten zu fahren, einschließen, und
der dritte Schwellenwert für die erste Differenz basierend auf den Vibrationseigenschaften des beweglichen Körpers oder der Fähigkeit des beweglichen Körpers, über Unebenheiten zu fahren, bestimmt wird.

9. Informationsverarbeitungsverfahren nach einem der Ansprüche 6 bis 8,
wobei, ob der zweite Punkt als der in der nachfolgenden Verarbeitung zu verarbeitende Punkt festgelegt wird, bestimmt wird, indem bestimmt wird, ob die zweite Differenz größer oder gleich einem vierten Schwellenwert ist,
die Informationen über den beweglichen Körper Vibrationseigenschaften des beweglichen Körpers einschließen, und
der vierte Schwellenwert für die zweite Differenz basierend auf den Vibrationseigenschaften des beweglichen Körpers bestimmt wird.

10. Informationsverarbeitungsverfahren nach einem der Ansprüche 1 bis 9,
wobei die nachfolgende Verarbeitung eine Objekterkennungsverarbeitung einschließt.

11. Informationsverarbeitungsvorrichtung (100), die Folgendes umfasst:
eine Erfassungseinheit (101), die eine Vielzahl von Punktinformationen einschließlich Positionsinformationen erfasst, die Positionen von Punkten angeben, die durch mindestens einen in einem beweglichen Körper bereitgestellten Punktgruppenerkennungssensor wahrgenommen werden;
eine Sucheinheit (104), die nach mindestens einem zweiten Punkt sucht, der innerhalb eines vorbestimmten Bereichs von einem entsprechenden mindestens einen ersten Punkt aus vorhanden ist, der innerhalb einer Punktgruppe vorhanden ist, die durch die Vielzahl von Punktinformationen angegeben wird;
eine Berechnungseinheit (105, 106), die für jeden von dem mindestens einen zweiten Punkt und dem entsprechenden ersten Punkt mindestens eine von einer ersten Differenz oder einer zweiten Differenz berechnet, wobei die erste Differenz eine Höhendifferenz zwischen dem ersten Punkt und dem zweiten Punkt ist und die zweite Differenz ein Winkel ist, der durch eine gerade Linie, die einen Referenzpunkt und den ersten Punkt verbindet, und eine gerade Linie, die den Referenzpunkt und den zweiten Punkt verbindet, gebildet wird;
eine Bestimmungseinheit (107), die:
basierend auf mindestens einer von der ersten Differenz oder der zweiten Differenz bestimmt, ob der zweite Punkt als ein in einer nachfolgenden Verarbeitung zu verarbeitender Punkt festgelegt werden soll,
die Informationsverarbeitungsvorrichtung, **dadurch gekennzeichnet, dass**: die Bestimmungseinheit (107) den mindestens einen zweiten Punkt als zu verarbeitender Punkt festgelegt wurden, zählt, und
bestimmt, ob die gezählte Zahl größer oder gleich einem ersten Schwellenwert ist; und
eine Gradientenberechnungseinheit (108), die, wenn die gezählte Zahl größer oder gleich dem ersten Schwellenwert ist, für jeden von dem mindestens einen zweiten Punkt und dem entsprechenden ersten Punkt einen Gradienten zwischen dem ersten Punkt und dem zweiten Punkt berechnet, wenn für den zweiten Punkt bestimmt wird, dass er als der in der nachfolgenden Verarbeitung zu verarbeitende Punkt festzulegen ist; und
eine Hindernisbestimmungseinheit (109), die den ersten Punkt und den zweiten Punkt als Hindernispunkte bestimmt, die einem Hindernis entsprechen, wenn der Absolutwert des berechneten Gradienten gleich oder größer als ein zweiter Schwellenwert ist.

## Revendications

1. Procédé de traitement d'information exécuté par un ordinateur, le procédé de traitement d'information comprenant :
l'acquisition (S101) d'une pluralité d'éléments d'information de point incluant une information de position indiquant des positions de points captées par au moins un capteur de détection de groupe de points prévu dans un corps mobile;
la recherche (S102) d'au moins un second point qui est présent à l'intérieur d'une zone prédéterminée à partir d'au moins un premier point correspondant qui est présent à l'intérieur d'un groupe de points indiqué par la pluralité d'éléments d'information de point;
pour chacun parmi les au moins un second point et premier point correspondant, le calcul (S103) d'au moins l'une parmi une première différence ou une seconde différence, la première différence étant une différence de hauteur entre le premier point et le second point, et la seconde différence étant un angle formé par une ligne droite qui relie un point de référence et le premier point et une ligne droite qui relie le point de référence et le second point;
le fait de déterminer (S104), sur la base d'au moins l'une parmi les premières différences ou les secondes différences, si oui ou non il convient de régler le second point en tant qu'un point à traiter dans un traitement subséquent;
**caractérisé en ce que** le procédé comprend en outre le décompte des au moins un seconds points réglés en tant qu'un point à traiter;
le fait de déterminer si oui non le nombre décompté est supérieur ou égal à une première valeur seuil;
si le nombre décompté est supérieur ou égal à la première valeur seuil, alors, pour chacun parmi les au moins un second point et premier point correspondant, le calcul d'un gradient entre le premier point et le second point lorsqu'il est déterminé que le second point est à régler en tant que le point à traiter dans le traitement subséquent; et
la détermination du premier point et du second point en tant que points d'obstacle correspondant à un obstacle, lorsque la valeur absolue du gradient calculée est supérieure ou égale à une deuxième valeur seuil.

2. Procédé de traitement d'information selon la revendication 1, comprenant en outre, pour chacun parmi les au moins un second point et premier point correspondant :
le calcul d'une distance entre un point de référence et le premier point ou d'une distance entre le point de référence et le second point; et
le fait de déterminer si oui ou non il convient de calculer au moins l'une parmi la première différence ou la seconde différence sur la base de la distance entre le point de référence et le premier point ou de la distance entre le point de référence et le second point.

3. Procédé de traitement d'information selon la revendication 1 ou 2,
dans lequel le au moins un capteur de détection de groupe de points comprend une pluralité de capteurs de détection de groupe de points,
le procédé de traitement d'information inclut en outre :
le fait de déterminer si oui ou non un capteur de détection de groupe de points qui a capté le premier point correspond à un capteur de détection de groupe de points qui a capté le second point; et
lorsqu'il est déterminé que le capteur de détection de groupe de points qui a capté le premier point ne correspond pas au capteur de détection de groupe de points qui a capté le second point, le calcul d'au moins l'une parmi la première différence ou la seconde différence.

4. Procédé de traitement d'information selon l'une quelconque des revendications 1 à 3, comprenant en outre :
le calcul d'une proportion de seconds points déterminés comme n'étant pas réglés en tant que le point à traiter dans le traitement subséquent, les seconds points étant chacun le second point;
le stockage de la proportion calculée, pour chaque scène en tant qu'historique;
le fait de déterminer si oui ou non des proportions différentes sont stockées pour une même scène en tant qu'historique, chacune des proportions étant la proportion de seconds points déterminés comme n'étant pas réglés en tant que le point à traiter dans le traitement subséquent; et
lorsqu'il est déterminé que des proportions différentes sont stockées en tant qu'historique, la sortie d'une notification.

5. Procédé de traitement d'information selon la revendication 4,
dans lequel la scène inclut une position,
l'historique est stocké pour chaque position ou attribut de position captés par le au moins un capteur de détection de groupe de points, et
si oui ou non des proportions différentes sont stockées en tant qu'historique est déterminé pour des scènes dont les positions ou attributs de position correspondent les un(e)s aux autres.

6. Procédé de traitement d'information selon l'une quelconque des revendications 1 à 5, comprenant en outre :
l'acquisition d'une information de corps mobile qui indique des caractéristiques du corps mobile; et
la détermination de la zone prédéterminée sur la base de l'information de corps mobile.

7. Procédé de traitement d'information selon la revendication 6,
dans lequel l'information de corps mobile inclut au moins l'une parmi une hauteur ou une largeur du corps mobile, et
la zone prédéterminée est déterminée sur la base d'au moins l'une parmi la hauteur ou la largeur du corps mobile.

8. Procédé de traitement d'information selon la revendication 6 ou 7,
dans lequel si oui ou non il convient de régler le second point en tant que le point à traiter dans le traitement subséquent est déterminé par le fait de déterminer si oui ou non la première différence est supérieure ou égale à une troisième valeur seuil,
l'information de corps mobile inclut des caractéristiques de vibration du corps mobile ou une capacité du corps mobile à passer par-dessus des bosses, et
la troisième valeur seuil pour la première différence est déterminée sur la base des caractéristiques de vibration du corps mobile ou de la capacité du corps mobile à passer par-dessus des bosses.

9. Procédé de traitement d'information selon l'une quelconque des revendications 6 à 8,
dans lequel si oui ou non il convient de régler le second point en tant que le point à traiter dans le traitement subséquent est déterminé par le fait de déterminer si oui ou non la seconde différence est supérieure ou égale à une quatrième valeur seuil,
l'information de corps mobile inclut des caractéristiques de vibration du corps mobile, et
la quatrième valeur seuil pour la seconde différence est déterminée sur la base des caractéristiques de vibration du corps mobile.

10. Procédé de traitement d'information selon l'une quelconque des revendications 1 à 9,
dans lequel le traitement subséquent inclut un traitement de détection d'objet.

11. Dispositif de traitement d'information (100) comprenant :
un moyen d'acquisition (101) qui acquiert une pluralité d'éléments d'information de point incluant une information de position indiquant des positions de points captées par au moins un capteur de détection de groupe de points prévu dans un corps mobile;
un moyen de recherche (104) qui recherche au moins un second point qui est présent à l'intérieur d'une zone prédéterminée à partir d'au moins un premier point correspondant qui est présent à l'intérieur d'un groupe de points indiqué par la pluralité d'éléments d'information de point;
un moyen de calcul (105, 106) qui calcule, pour chacun parmi les au moins un second point et premier point correspondant, au moins l'une parmi une première différence ou une seconde différence, la première différence étant une différence de hauteur entre le premier point et le second point, et la seconde différence étant un angle formé par une ligne droite qui relie un point de référence et le premier point et une ligne droite qui relie le point de référence et le second point;
un moyen de détermination (107) qui :
détermine, sur la base d'au moins l'une parmi la première différence ou la seconde différence, si oui ou non il convient de régler le second point en tant qu'un point à traiter dans un traitement subséquent;
le dispositif de traitement d'information **caractérisé en ce que** : le moyen de détermination (107) décompte le au moins un second point réglé en tant qu'un point à traiter; et
détermine si oui non le nombre décompté est supérieur ou égal à une première valeur seuil; et
un moyen de calcul de gradient (108) qui, si le nombre décompté est supérieur ou égal à la première valeur seuil, alors, pour chacun parmi les au moins un second point et premier point correspondant, calcule un gradient entre le premier point et le second point lorsqu'il est déterminé que le second point est à régler en tant que le point à traiter dans le traitement subséquent; et
un moyen de détermination de point d'obstacle (109) qui détermine le premier point et le second point en tant que correspondant à un obstacle, lorsque la valeur absolue du gradient calculée est supérieure ou égale à une deuxième valeur seuil.
